# EUROPÄISCHE PATENTANMELDUNG

(11) **EP 0 680 965 A1**
(43) Veröffentlichungstag der Anmeldung: **08.11.1995**
(21) Anmeldenummer: 95106758.6
(22) Anmeldetag: 04.05.1995
(51) Int. Cl.: C07F 7/12, C07F 7/16, C07F 7/20

(54) **Verfahren zur Entfernung von Olefinen aus Silanen**

(30) Priorität: 05.05.1994 DE 4415924
(71) Anmelder: Wacker-Chemie GmbH, D-81737 München (DE)
(72) Erfinder: Mautner, Konrad, Dr., D-84556 Kastl (DE); Schinabeck, Anton, D-84489 Burghausen (DE)
(74) Vertreter: Fritz, Helmut, Dr.

(57) **Zusammenfassung**

Bei dem Verfahren zur Entfernung von Olefinen aus bei der Methylchlorsilansynthese anfallenden Silanen oder Silangemischen werden die Olefine mit Wasserstoff in Gegenwart von Hydrierkatalysatoren umgesetzt.

## Beschreibung

Die Erfindung betrifft ein Verfahren zur Entfernung von Olefinen aus Silanen und Silangemischen, die in der Direktsynthese von Methylchlorsilanen anfallen.

Olefine sind, wie gesättigte Kohlenwasserstoffe, Aromaten und Chlorkohlenwasserstoffe, Nebenprodukte in der Direktsynthese von Methylchlorsilanen nach Müller-Rochow aus Silicium und Chlormethan bei 250 bis 300°C mit Kupferkatalysatoren. Anders als Alkane sind Olefine durch ihre Kohlenstoff-Kohlenstoff-Doppelbindung reaktiv und können in einer Reihe von nachfolgenden Prozessen zu Beeinträchtigungen führen. Beispielsweise sind sie in der Lage, HCl zu addieren, um sie anschließend bei thermischer Belastung auch wieder zu eliminieren. Durch die abgespaltene HCl kann es zur Inhibierung von Katalysatoren, zu Korrosionen an Behältern und Anlagen, zu säurekatalysierten Nebenreaktionen in Prozessen oder an Stellen kommen, wo eigentlich die Beteiligung von HCl ausgeschlossen sein sollte. Auch Olefine selbst können inhibierend wirken, z.B. auf Edelmetallkatalysatoren bei der Hydrosilylierung.

Bisher hat man versucht, die Olefine soweit als möglich destillativ zu entfernen. Allerdings liegen die Siedepunkte häufig so nahe an den Siedepunkten von monomeren Organochlorsilanen, daß eine Abtrennung mit vertretbarem Aufwand nicht durchführbar ist.

In EP-A-310 258 ist ein Verfahren zur Verringerung des Gehalts an Olefinen in Methylchlorsilanen beschrieben, bei dem die Olefine mit direkt an Silicium gebundenen Wasserstoffatomen aufweisenden Methylchlorsilanen (H-Silane) in Gegenwart eines gelösten Platin-Katalysators zu Silaalkanen umgesetzt werden. Das Verfahren benötigt zur vollständigen Umsetzung H-Silane im Überschuß, die, wenn sie zusätzlich zum ursprünglichen Silanstrom zugesetzt wurden, auch wieder abgetrennt werden müssen. Auch die Silaalkane müssen abgetrennt werden, da diese in der Regel noch reaktive Gruppen wie Si-Cl enthalten.

Es bestand die Aufgabe, ein Verfahren zur Entfernung von Olefinen aus bei der Methylchlorsilansynthese anfallenden Silanen oder Silangemischen bereitzustellen, bei dem nur leicht entfernbare Stoffe in die Silane oder Silangemische eingebracht werden.

Die Erfindung betrifft ein Verfahren zur Entfernung von Olefinen aus bei der Methylchlorsilansynthese anfallenden Silanen oder Silangemischen, wobei die Olefine mit Wasserstoff in Gegenwart von Hydrierkatalysatoren umgesetzt werden.

Die Olefine werden zu den entsprechenden Alkanen umgesetzt. Beispielsweise entsteht aus 3-Methyl-2-penten das 3-Methylpentan. Die Alkane können auf Grund ihres reaktionsträgen Verhaltens und der meist recht geringen Konzentration in den Silanen oder Silangemischen verbleiben. Falls die Alkane jedoch abgetrennt werden müssen, kann dies durch einfache Destillation geschehen.

Pro Mol Doppelbindungen in den Olefinen wird mindestens ein Mol Wasserstoff eingesetzt. Vorzugsweise wird Wasserstoff im Überschuß von mindestens 2 Mol pro Mol Doppelbindungen verwendet. Da Wasserstoff bei den in Frage kommenden Temperaturen und Drücken als Gas vorliegt, ist er nach der Umsetzung sehr leicht aus den Silanen oder Silangemischen abtrennbar. Es kann handelsüblicher Wasserstoff für Hydrierzwecke eingesetzt werden. Vorzugsweise wird der Wasserstoff vor dem Katalysatorbett im Silan oder Silangemisch möglichst fein verteilt.

Der Ausdruck "bei der Methylchlorsilansynthese anfallende Silane oder Silangemische" beinhaltet auch nach der Synthese aufgetrennte, angereicherte oder weiterverarbeitete Silane oder Silangemische und schließt beispielsweise Phenylchlorsilane mit ein.
Die bei der Methylchlorsilansynthese anfallenden Silane oder Silangemische sind oder enthalten im wesentlichen Silane der allgemeinen Formel I

RₓCl₃₋ₓSi-[SiR_{y}Cl_{2-y}]ₙ-A, (I)

wobei **R** ein Wasserstoffatom, einen Methyl-, Phenyl- oder Ethylrest bedeutet, **A** ein Chloratom oder einen Rest **R** bedeutet, **x** die Werte 0, 1, 2 oder 3 hat, **y** die Werte 0, 1 oder 2 hat und **n** die Werte 0 oder 1 hat.

Beispiele für die Silane der allgemeinen Formel I sind Methylchlorsilane, wie Methyltrichlorsilan, Methyldichlorsilan, Dimethyldichlorsilan, Trimethylchlorsilan, Trimethylsilan, Tetramethylsilan; Ethylchlorsilane, wie Ethyltrichlorsilan; Phenylchlorsilane, wie Phenyltrichlorsilan, Phenylmethyldichlorsilan; Chlorsilane, wie Trichlorsilan, Tetrachlorsilan; Oligosilane, wie Hexachlordisilan, Hexamethyldisilan und Methylchlordisilane. Vorzugsweise enthält das Silangemisch keine H-Silane und Oligosilane.

Bei den abzutrennenden Olefinen handelt es sich vor allem um lineare oder verzweigte Olefine mit 2 bis 10 Kohlenstoffatomen. Die hauptsächlich störenden Olefine haben 5 bis 7 Kohlenstoffatome, sieden zwischen 20 und 100°C und können in verschiedenen, regio- und stereochemischen Isomeren auftreten, z.B. isomere Methylbutene, isomere 2,3-Dimethylbutene, 2,3,3-Trimethyl-1-buten, isomere Methylpentene, isomere Dimethylpentene, isomere Hexene, isomere Methylhexene und isomere Heptene.

Der Gehalt an Olefinen in technischen Silanen, Silangemischen und Silanströmen der großtechnischen Destillation von Silanen ist abhängig vom betrachteten Silan oder Silangemisch und vom Zustand der Silansynthese. Besonders in der Anfahrphase und in der Ausfahrphase von Silanreaktoren treten vermehrt Nebenprodukte auf. Daher können Olefingehalte bis hin zu 10000 ppm auftreten.

Als weitere Verunreinigungen der Silane oder Silangemische treten häufig lineare und verzweigte Alkane mit 1 bis 10 Kohlenstoffatomen, Chlorkohlenwasserstoffe mit 1 bis 10 Kohlenstoff- und 1 bis 3 Chloratomen sowie aromatische Kohlenwasserstoffe mit 6 bis 10 Kohlenstoffatomen auf.

Als Katalysatoren eignen sich alle bekannten Hydrierkatalysatoren. Hydrierkatalysatoren werden eingeteilt in homogene und heterogene Katalysatoren.

Homogene Hydrierkatalysatoren sind Komplexverbindungen von Übergangsmetallen, insbesondere Metalle der 8. Nebengruppe. Ein besonders bevorzugtes Beispiel ist (Ph₃P)₃RuCl, der Wilkinsonkatalysator.

Als heterogene Hydrierkatalysatoren wirken eine Reihe von Übergangsmetallen, Übergangsmetalloxiden und Übergangsmetallsulfiden in fein verteilter Form. Bei den Übergangsmetallen handelt es sich vorzugsweise um Metalle der 1., 2., 6. und 8. Nebengruppe, wie Kupfer, Zink, Chrom, Eisen, Nickel, Kobalt, Rhodium, Ruthenium, Platin und Palladium. Beispiele für geeignete Oxide sind Kupferchromit (CuO · Cr₂O₃) und Zinkchromit (ZnO · Cr₂O₃). Beispiele für geeignete Sulfide sind Molybdänsulfid und Wolframsulfid.

Bevorzugt eingesetzt werden heterogene Hydrierkatalysatoren, speziell Übergangsmetalle der 8. Nebengruppe, z.B. Eisen, Nickel, Kobalt, Rhodium, Ruthenium, Platin und Palladium, besonders bevorzugt Palladium und Platin.

Vorzugsweise sind die heterogenen Hydrierkatalysatoren auf Träger aufgebracht, um sie beispielsweise in einem durchströmten Festbettreaktor, wie einer Destillationskolonne oder einem Durchflußreaktor, einsetzen zu können.

Die Träger sind vorzugsweise stückig, um den Druckabfall beim Durchströmen mit Silanen oder Silangemischen möglichst gering zu halten. Bei den Trägermaterialien kommen alle gängigen Materialien, wie Kohlen und Keramikträger, in Frage. Beispiele für Träger sind Aktivkohle und anorganische Oxide, wie Siliciumdioxid, Aluminium(III)oxid, Silikate, Titandioxid, Zirkondioxid; Carbide, wie Siliciumcarbid; wobei Aktivkohle und Siliciumdioxid bevorzugte Beispiele sind. Besonders bevorzugt als Hydrierkatalysator ist Palladium auf stückiger Aktivkohle.

Derartige Hydrierkatalysatoren, bei denen sich die feinverteilten Metalle auf Trägern befinden, können durch Reduktion von Metallverbindungen in Gegenwart des Trägers hergestellt werden.

Die Konzentration der Metalle auf den Trägern beträgt vorzugsweise 0,5 bis 5 Gew.-%, bezogen auf das Gesamtgewicht des Katalysators; es können aber auch höhere oder niedrigere Konzentrationen verwendet werden.

Der verwendete Katalysator kann in der Flüssigphase oder in der Gasphase zum Einsatz kommen.

Um die Katalysatoraktivität möglichst lange zu erhalten, sollen die Silane oder Silangemische frei von festen oder pastösen Verunreinigungen sein und keine Schwermetalle, wie Blei, die als Katalysatorgifte wirken, enthalten. Die genannten, störenden Verunreinigungen lassen sich in einer einfachen Destillation abtrennen.

Die Hydrierung erfolgt bereits bei Raumtemperatur, etwa 20°C und Umgebungsdruck, etwa 0,10 MPa. Mit steigender Temperatur wird auch das Hydrierergebnis besser, d.h. die Verweilzeit für > 95 %ige Abtrennung sinkt. Bevorzugt sind Temperaturen von 20 bis 90°C, insbesondere von 40 bis 80°C. Die Temperatur wird durch die Siedetemperatur des Gemisches nach oben begrenzt. Die Hydrierung kann bei unterschiedlichen Drücken durchgeführt werden. Bevorzugt sind Drücke von 0,1 bis 0,5 MPa, insbesondere 0,1 bis 0,3 MPa.

Die Verweilzeit im Reaktor, der bevorzugt kontinuierlich betrieben wird, reicht von 1 sec bis 1 h. Bevorzugt beträgt die Verweilzeit weniger als 10 min.

Das Verfahren kann absatzweise, halbkontinuierlich oder vollkontinuierlich durchgeführt werden, wobei bevorzugt die vollkontinuierliche Fahrweise zum Einsatz kommt.

### Beispiel

Das Beispiel zeigt neben dem Einfluß der Temperatur die Abnahme der Olefine und Zunahme von Alkanen. Durch einen stehenden Reaktor mit 50 mm Durchmesser und 500 mm Länge, gefüllt mit einem metallischen Palladiumkatalysator auf stückiger Aktivkohle (5 Gew.-% Pd, erhältlich unter der Bezeichnung K-0219 von W.C. Heräus GmbH, Hanau) wurde von unten olefinhaltiges Methyltrichlorsilan bei verschieden Temperaturen und 0,10 MPa geleitet. Im Gleichstrom wurde Wasserstoff in das Katalysatorbett gespeist. Die Verweilzeit betrug 5 min, der Volumenstrom Wasserstoff 1,3 l/h.

**Tabelle**

| Hydrierung von Olefinen in Methyltrichlorsilan | | | | |
|---|---|---|---|---|
| **Komponente** | **20**^{**o**}**C** | | **50**^{**o**}**C** | |
| | **vor Reaktor** | **nach Reaktor** | **vor Reaktor** | **nach Reaktor** |
| | **[ppm]** | **[ppm]** | **[ppm]** | **[ppm]** |
| trans-2-Hexen | 15 | 1 | 15 | 0 |
| cis-3-Methyl-2-penten | | | | |
| | 18 | 1 | 18 | 0 |
| cis-2-Hexen | 25 | 0 | 25 | 0 |
| trans-3-Methyl-2-penten | | | | |
| | 6 | 1 | 6 | 0 |
| 2,3-Dimethyl-2-buten | | | | |
| | 14 | 6 | 14 | 1 |
| 2-Methylpentan | 0 | 5 | 0 | 15 |
| 3-Methylpentan | 0 | 11 | 1 | 47 |

## Patentansprüche

1. Verfahren zur Entfernung von Olefinen aus bei der Methylchlorsilansynthese anfallenden Silanen oder Silangemischen, wobei die Olefine mit Wasserstoff in Gegenwart von Hydrierkatalysatoren umgesetzt werden.

2. Verfahren nach Anspruch 1, wobei lineare oder verzweigte Olefine mit 2 bis 10 Kohlenstoffatomen entfernt werden.

3. Verfahren nach Anspruch 1 oder 2, wobei als Hydrierkatalysatoren Eisen, Nickel, Kobalt, Rhodium, Ruthenium, Platin oder Palladium eingesetzt werden.
